Europäisches Patentamt

European Patent Office

Office européen des brevets

(19)

(11) EP 1 069 664 A2

(12) EUROPEAN PATENT APPLICATION

(43) Date of publication:
17.01.2001 Bulletin 2001/03

(51) Int Cl.⁷: $H02H\ 7/16$, $H02H\ 3/40$

(21) Application number: 00660109.0

(22) Date of filing: 14.06.2000

(84) Designated Contracting States:
AT BE CH CY DE DK ES FI FR GB GR IE IT LI LU MC NL PT SE
Designated Extension States:
AL LT LV MK RO SI

(30) Priority: 24.06.1999 FI 991442

(71) Applicant: ABB Substation Automation Oy
65320 Vaasa (FI)

(72) Inventor: Kuisti, Harri
02720 Espoo (FI)

(74) Representative: Peltonen, Antti et al
Kolster Oy Ab,
Iso Roobertinkatu 23
00120 Helsinki (FI)

(54) **Method of protecting network component**

(57) A method of protecting a network component (1) comprising phase-specific branches and being connected to different phases of an electric network (2) through its branches. The method comprises steps in which impedance estimates of the network component branches are defined, the sizes of the defined impedance estimates are monitored, and an alarm signal is produced after a pre-set time from the changing of the impedance estimate sizes more than a pre-set value.

FIG.6

## Description

BACKGROUND OF THE INVENTION

The invention relates to a method of protecting a network component comprising phase-specific branches and being connected to different phases of an electric network through its branches, the method comprising steps in which impedance estimates of the network component branches are defined, the sizes of the defined impedance estimates are monitored and an alarm signal is produced after a pre-set time from the changing of the impedance estimate sizes more than a pre-set value.

A network component, such as a capacitor battery, is made up of several individual capacitors grouped in various ways in series and/or parallel. A similar capacitor group is associated with each phase of an electric network. Phase-specific capacitor groups are connected in a star, double star or delta arrangement, whereby they are said to form a capacitor battery. When one individual capacitor in a battery short-circuits and/or a fuse protecting an individual capacitor is blown, an imbalance is created in the battery. The imbalance may cause a higher than normal voltage load in the intact capacitors of the battery, which is why imbalance protection of the capacitor battery is needed. The problem is in detecting the imbalance before it causes too high voltage loads to the intact capacitors in the battery.

Individual capacitors may short-circuit and/or their fuses may blow in a capacitor battery without the asymmetry and thus the voltage effective over individual capacitors becoming harmfully high. It would, however, be advantageous for the monitoring of battery condition, if even at this time it was possible to detect the short-circuits and/or blowing of fuses of individual capacitors. This is especially important in network components whose task is to remove voltage harmonics from the network. These network components are called harmonic filters, i.e. absorbing circuits. Absorbing circuits are made up of combinations of capacitors and chokes. The short-circuits and blowing of fuse of individual capacitors alter the tuning frequency of the entire absorbing circuit and may thus impair the ability of the absorbing circuit to remove from the electric network the voltage harmonic it is intended to remove. The result may not only be an increase in the voltage harmonics content of the network, but also a danger of resonance.

An absorbing circuit may also be damaged at the chokes as a result of turn-to-turn faults. One problem is also to be able to detect a change in the tuning frequency of the absorbing circuit caused by this.

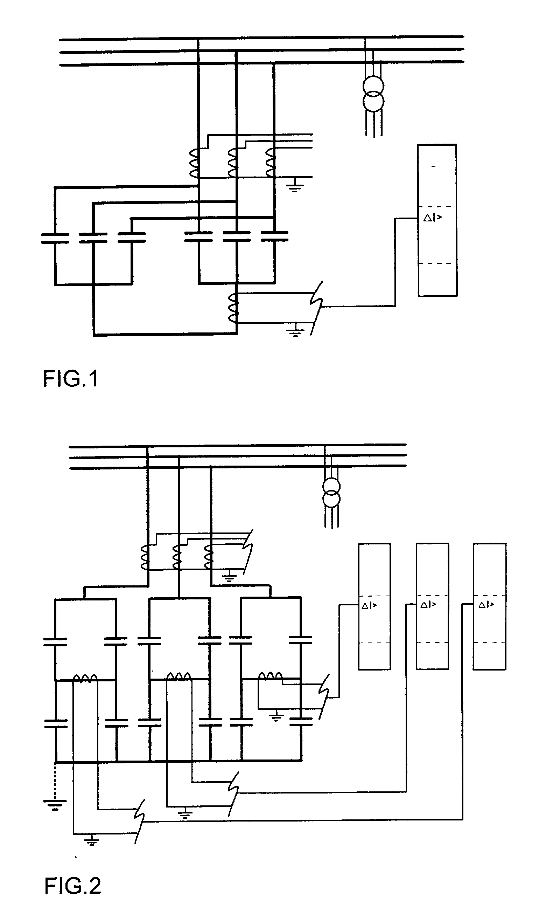

Due to the simplicity achieved by imbalance protection, a lot of what are known as double star connected capacitor batteries are used, comprising two parallel star-connected batteries 10, 11, the current flowing in the conductor 12 between the star points being measured as shown in Figure 1. When a short-circuit occurs in an individual capacitor and/or its fuse blows, the equalising current between the star points changes. This known solution provides a very sensitive imbalance protection of a capacitor battery, which protection does not significantly react to short-term or long-term voltage asymmetries, if the impedances of the various capacitor battery branches are nearly the same. This solution is also very simple, since it only requires the measurement of the current between the star points and one phase current or a voltage. Measuring one phase current or a voltage is necessary to be able to proportion the phase angle of a phasor of the current between the star points to a reference signal and to subtract from the measured current phasor the phasor of the current flowing between the star points in a normal situation. The resulting compensated current phasor is thus zero in size until an individual capacitor in the capacitor battery is damaged. Imbalance protection of a double star connected capacitor battery by measuring the equalising current between the star points is a well-working and simple solution, but to measure the equalising current, an extra current measuring device 13 is required.

Bridge-connected capacitor batteries, as described in Figure 2, are also often used, in which the capacitor group of each phase is made up of two parallel branches, the equalising currents between their centre points 20 being measured in the same manner as the current between the star points of double star connected capacitor batteries, as shown in Figure 2. In this case, too, a very sensitive imbalance protection of the capacitor battery, which is also immune to asymmetries in the network, is achieved. However, when using a bridge connection, three different equalising currents need to be measured, which makes the solution more complicated than a double star connection.

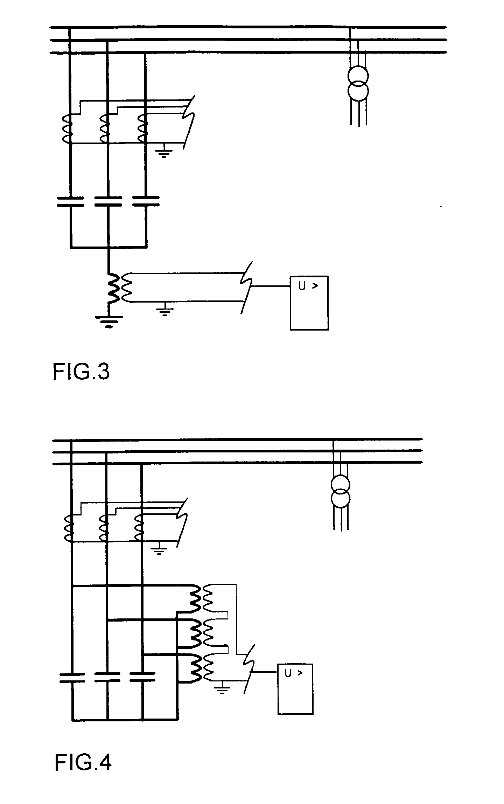

Capacitor batteries 30, 40 connected to a single star are sometimes also used. Several known solutions exist for their imbalance protection. If the star point 31, 41 of a capacitor battery is separated from ground, it is possible to measure either the star point voltage with respect to the ground as shown in Figure 3, or the sum voltage of the voltages effective over all three branches of the capacitor battery by means of an open delta connection of voltage transformers 42, for instance, as shown in Figure 4. Measuring a star point voltage is a simple solution, but protection operating according to this principle is also triggered by a network voltage asymmetry even though the capacitor battery is intact. The sum of the voltages measured over the different branches of the capacitor battery does not significantly change when the network asymmetry changes, if the impedances of the various branches are almost the same. This principle thus leads to a better selectivity and a good sensitivity. A drawback is that three voltage transformers are required.

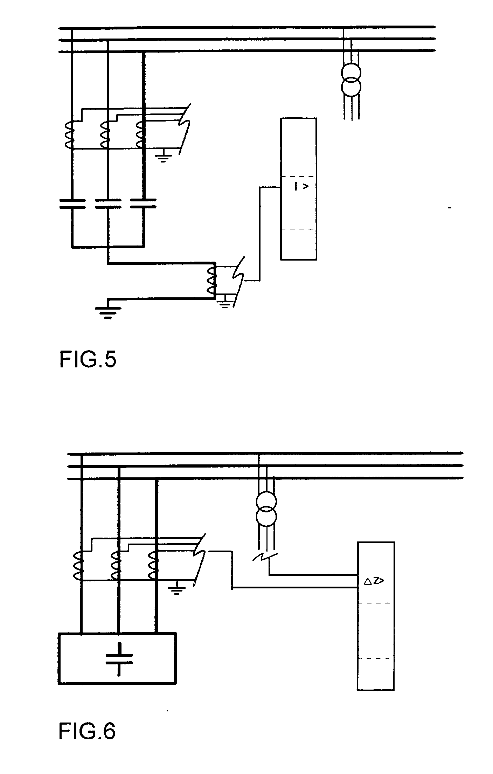

A known manner of arranging imbalance protection for a grounded star-connected capacitor battery 51 is to measure the current flowing from the star point 50 to the ground as shown in Figure 5. This principle is simple, but very sensitive to network voltage asymmetry. When using this method, it is thus possible that unwanted protection relay operation occurs.

Patent publication SU 1359851 A1 discloses a method based on an analogue electronic connection for imbalance protection of a capacitor battery. In it, a relay operates when the ratio of the impedances of various phases change. Drawbacks of the method disclosed in the publication are that the method only works with capacitor batteries grounded at their star point and that due to the analogue electronic implementation, an exact tuning of the protective device is required.

For condition monitoring of a capacitor battery and an absorbing circuit, there are no other known solutions than the measurement of the reactive power produced by the battery. Monitoring the condition of a capacitor battery by simply measuring its reactive power is a simple principle, but makes only a rough monitoring possible, since the variation of reactive power caused by the variation of the network voltage level needs to be taken into account with a sufficient marginal. This method does not indicate defects in the choke of an absorbing circuit, since a defect in the choke does not change much the fundamental wave reactive power fed by the battery. A known solution measuring reactive power thus does not make it possible to detect an absorbing circuit going out of tune.

Publication US 4,337,833 discloses a method and apparatus relating to monitoring the condition of a choke. In the publication, the monitoring is based on defining the voltage over the choke. The solution requires, however, that the network component in question is grounded at one of its ends.

BRIEF DESCRIPTION OF THE INVENTION

It is an object of the invention to provide a method which avoids the above-mentioned drawbacks and makes it possible to monitor the condition of a network component, such as a capacitor battery or a harmonic filter, better and more reliably than before regardless of the structure of the network component. This object is achieved by a method of the invention, which is characterized in that the definition of impedance estimates comprises steps in which main voltage phasors of the different phases of the electric network are measured, current phasors of the different branches of the network component are measured and the impedance estimates are defined on the basis of the measured main voltage phasors of the electric network and the measured current phasors of the different branches of the network component.

The method of the invention is based on the idea that by defining the phase-specific impedance estimates of the network component, it is possible to find out the condition of the network component in a reliable manner on the basis of them. The method and system of the invention provide the advantage that in the solution, it is possible to get by by measuring the network-side phase currents and busbar voltages of the network component. Measuring devices required for these measurements are in general used because of other protective functions in any case, in which case the imbalance protection of a capacitor battery, for instance, in the manner of the invention does not require any extra measuring devices as do all known solutions.

Imbalance protection of a double star connected and bridge connected capacitor battery, based on measuring the equalising currents, requires one or even three extra current measuring devices, which raises the price of the solution. Known imbalance protection manners of a single star connected capacitor battery also require extra current or voltage measurements.

Imbalance protection of a single star connected capacitor battery, based on a star point current or voltage measurement, is also unnecessarily triggered by voltage asymmetries of the network. The solution of the invention removes this problem, since it is not significantly sensitive to the voltage asymmetry of the network, if the impedances of the different branches of the capacitor battery are almost the same, as they are when complying with commonly applied manufacturing tolerances.

The method of the invention eliminates the drawbacks of the method disclosed in patent publication SU 1359851 A1, since the solution of the invention calculates the impedances between phases and their ratios, whereby the method works correctly regardless of the connection and grounding manner of the capacitor battery. Since the measurement of the changes in impedance ratios is also based on calculation enabled by processor technology, the need for arduous tuning of the protective device is avoided.

When compared with a method monitoring the condition of a capacitor battery by measuring reactive power only, the solution of the invention makes a more exact monitoring possible, since the voltage level variations of the network do not affect measuring the impedance. The method of the invention also makes it possible to monitor the condition of the absorbing circuit on the part of the choke, too, which is what a device measuring the fundamental frequency reactive power cannot do accurately enough.

BRIEF DESCRIPTION OF THE FIGURES

In the following, the invention will be described in greater detail by means of preferred embodiments with reference to the attached drawings in which

Figure 1 shows an imbalance protection based on a double star connection,
Figure 2 shows an imbalance protection based on a bridge connection,
Figure 3 shows an imbalance protection based on measuring a star point voltage,
Figure 4 shows an imbalance protection based on measuring a sum voltage,
Figure 5 shows an imbalance protection based on measuring a star point current, and
Figure 6 shows an imbalance protection based on impedance measurement according to the invention.

DETAILED DESCRIPTION OF THE INVENTION

The solution of the invention described in Figure 6 is based on measuring the impedance of a network component, such as a capacitor battery 1. In a corresponding manner, it is possible to measure, instead of the impedance, the reactance or capacitance of the network component, since these quantities are dependent on each other and any one of them can be measured. Figure 6 shows an electric network 2 whose voltage properties the capacitor battery 1 connected to it endeavours to influence. The internal connections of the capacitor battery is not shown in Figure 6, since the method of the invention can be utilised regardless of the type of the internal connections. Capacitor batteries are used in electric networks to provide the reactive power generally needed. Absorbing circuits, i.e. harmonic filters, connected to the electric network are mainly used to remove harmful large voltage harmonics occurring in the network. An absorbing circuit is made up of a resonance circuit formed by capacitive and inductive components, whose resonance frequency is tuned to the frequency of the occurring harmonic. A path with a small impedance is formed for the harmonic in question, connected between the phase of the electric network and the ground, and the harmonic in question becomes significantly smaller in the electric network.

Figure 6 also shows branch-specific current transformers 3, 4, 5 connected to the network component branches connected to the phases of the electric network. The current transformers measure the size of the current flowing in the branches of the network component. The voltage of the electric network 2 is, for its part, measured by means of voltage transformers or other voltage measuring devices 6 connected to the network.

According to the invention, impedance estimates $\underline{Z}_{c1}$, $\underline{Z}_{c2}$, $\underline{Z}_{c3}$ of the network component branches are defined so as to be able to detect a possible network component imbalance caused by the damaging of one or more capacitors of the network component, for instance. Further according to the method, the sizes of the defined impedance estimates are monitored and when the impedance estimate sizes change more than a pre-set value $\Delta Z$, an alarm signal is produced after a pre-set time t. The impedance estimates are defined using a processing element 7 to which the current measurement data of the network component branches and the voltage measurement data of the electric network are transmitted. The processing element further monitors the changes in the sizes of the impedance estimates and produces an alarm signal, when necessary. A tolerance limit $\Delta Z$ is defined for the processing element, and if the size of one or more impedances changes more than the limit value in question and if the change lasts longer than the pre-set time t, the processing element produces an alarm signal. Impedance sizes are defined either continuously or as a timed function.

According to a preferred embodiment of the invention, the method also comprises a step in which the network component is detached from the electric network after a pre-set time has expired from the changing of the sizes of the impedance estimates more than the pre-set value. A faulty network component or its part is when detected then detached from the electric network. In the embodiment, the same limit values $\Delta Z$ and t as in connection with the alarm signal can be set as the tolerance limits, but the limit values can also be of different size. If the limit values in question are of different size, an alarm can, for instance, be produced first when the network component becomes faulty, and when the situation continues for a longer period of time, the network component can be detached from the electric network.

According to an embodiment of the invention, the definition of impedance estimates comprises steps in which the main voltage phasors of the different phases of the electric network are measured, the current phasors of the different branches of the network component are measured, and the impedance estimates are defined on the basis of the measured electric network voltages and the measured currents of the network component branches. Main voltages are preferably used if the star point of the capacitor battery is separated from ground or the battery is delta-connected. Three different estimates are obtained for the impedance $\underline{Z}_c$:

$$\underline{Z}_{c1} = \underline{U}_{12} / (\underline{I}_{L1} - \underline{I}_{L2})$$

$$\underline{Z}_{c2} = \underline{U}_{23} / (\underline{I}_{L2} - \underline{I}_{L3})$$

$$\underline{Z}_{c3} = \underline{U}_{31} / (\underline{I}_{L3} - \underline{I}_{L1})$$

where $\underline{U}_{12}$ used in calculating $\underline{Z}_{c1}$ is a voltage phasor between two phases of the electric network, i.e. the main voltage phasor, and $\underline{I}_{L1}$ and $\underline{I}_{L2}$ are current phasors of network component branches connected to the corresponding phases of the electric network. In calculating the other impedance estimates $\underline{Z}_{c2}$, $\underline{Z}_{c3}$, the voltage and current phasors connected to the branch and phase in question are correspondingly used.

Impedance estimates $\underline{Z}_{c1}$, $\underline{Z}_{c2}$ and $\underline{Z}_{c3}$ do not necessarily represent actual impedances of the capacitor battery branches in this case, nor is it even in theory possible to calculate universally applicably the actual impedances from measured main voltages and phase currents. Said impedance estimates are the same as the actual impedances only when the impedances of all branches are exactly the same. The intention of the solution of the invention is not to calculate the actual impedances, but to detect an imbalance in a capacitor battery from the changes in the calculated impedance estimates. When the actual impedance of a branch of the network component, such as a capacitor battery, changes as a result of a short-circuit or a blown fuse in individual capacitors, at least two of the above impedance estimates also change.

If only one main voltage is measured from the electric network, it is possible to apply the impedance formulas disclosed earlier in such a manner that the same voltage is used in all formulas, but the phase currents are utilised as such or phase inversions are performed on the current phasors or impedances to make the obtained impedances nearly the same.

In an embodiment of the invention, the ratios $\underline{Z}_{c12}$, $\underline{Z}_{c23}$, $\underline{Z}_{c31}$ of impedance estimates between the different branches of the network component are calculated, the ratios of the impedance estimates of the different branches are monitored and an alarm signal is produced after a pre-set time when one or more impedance estimate ratios differs from a pre-set value more than a pre-set quantity. According to the embodiment, the ratios $\underline{Z}_{c12}$, $\underline{Z}_{c23}$, $\underline{Z}_{c31}$ of the impedances of the different branches of the network component are thus calculated.

$$\underline{Z}_{c12} = \underline{Z}_{c1} / \underline{Z}_{c2}$$

$$\underline{Z}_{c23} = \underline{Z}_{c2} / \underline{Z}_{c3}$$

$$\underline{Z}_{c31} = \underline{Z}_{c3} / \underline{Z}_{c1}$$

By calculating the interrelations of impedances between phases, it is possible to eliminate to a large extent the impact of temperature, since it can be assumed that all network component capacitances change with the temperature in the same proportion, whereby said ratios remain the same. The ratios are used according to the embodiment in the same way as the impedance estimates in the embodiment of the invention described earlier.

When the network component is an absorbing circuit, the principles and formulas presented above are applied to condition monitoring, but instead of fundamental frequency voltage and current phasors, it is preferable to use phasors calculated for the harmonic to which the absorbing circuit is tuned. Such a practice is advantageous, since the impedance of the absorbing circuit on a fundamental wave does not change much as a result of a defect in the choke. Instead, the impedance of the absorbing circuit calculated on a tuning frequency changes clearly as a result of both capacitor and choke defects.

In an embodiment of the invention, the temperature of the network component is measured and the impedance estimate is corrected according to the measured network component temperature. Typically, the temperature is measured from the capacitors of the network component.

Measuring the temperature of the capacitor provides the advantage that imbalance protection of the capacitor battery can in principle be made more sensitive. When measured impedances are corrected in a calculatory manner according to the temperature or correspondingly, the tolerance limits are changed, the impact of temperature can be eliminated. The obtained impedance estimate varies then less when the capacitor is intact, whereby the apparatus can be set to react to smaller impedance changes originating from capacitor defects. In practice, different materials of varying properties are used in capacitor batteries and the temperature dependence of the capacitance is not always known. The temperature dependence may even with the same material be different in a new capacitor than in an old one.

In the method of the invention, the failure of the network component is determined by means of impedance estimates and as the impedance estimate to be measured, the impedances between phases as such can be selected or their interrelations or the impedances calculated from the positive sequence components of the voltages and currents. The positive sequence components of voltages and currents and the impedance derived from them are calculated as known with the following formulas.

$$\underline{U}_1 = (\underline{U}_{L1} + \underline{a} * \underline{U}_{L2} + \underline{a}^2 * \underline{U}_{L3}) / 3$$

$$\underline{I}_1 = (\underline{I}_{L1} + \underline{a} * \underline{I}_{L2} + \underline{a}^2 * \underline{I}_{L3}) / 3$$

$$\underline{Z}_1 = \underline{U}_1 / \underline{I}_1$$

$$\underline{a} = e^{i\frac{2\pi}{3}}$$

The principle based on the impedance calculated from the positive sequence components of voltages and currents provides two advantages. Firstly, the implementation is more simple, since only one impedance needs to be monitored instead of three. The second advantage relates to a case where the electric network frequency differs from the rated one. The length of the voltage and current phasors calculated by a discrete Fourier filter oscillates when the frequency differs from the expected value, which also results in the oscillation of the calculated impedance values around the correct values.

The positive sequence components of voltages and currents have, however, the advantageous property that in them, said oscillation does not occur, but is eliminated in calculating the positive sequence components. Thus, even the calculated impedance is more stable when using positive sequence components. The oscillation of the impedance estimate can also be eliminated by simply averaging the estimates.

It is obvious to a person skilled in the art that while technology advances, the basic idea of the invention can be implemented in many different ways. The invention and its embodiments are thus not restricted to the examples described above, but can vary within the scope of the claims.

**Claims**

1.   A method of protecting a network component (1) comprising phase-specific branches and being connected to different phases of an electric network (2) through its branches, the method comprising steps in which

impedance estimates of the network component branches are defined,
the sizes of the defined impedance estimates are monitored, and
an alarm signal is produced after a pre-set time from the changing of the impedance estimate sizes more than a pre-set value, **characterized** in that the definition of the impedance estimates comprises steps in which
main voltage phasors of the different phases of the electric network (2) are measured,
current phasors of the different branches of the network component (1) are measured, and
impedance estimates are defined on the basis of the measured main voltage phasors of the electric network and the measured current phasors of the network component branches.

2.   A method as claimed in claim 1, **characterized** in that the method also comprises a step in which
the network component (1) is detached from the electric network (2) after a pre-set time from the changing of the sizes of the impedance estimates more than a pre-set value.

3.   A method as claimed in claim 1 or 2, **characterized** in that the method also comprises steps in which

the ratios of the impedance estimates between different branches of the network component (1) are calculated,
the ratios of the impedance estimates of different branches are monitored, and
an alarm signal is produced after a pre-set time when one or more impedance estimate ratios differ from a pre-set value more than a pre-set quantity.

4.   A method as claimed in claim 3, **characterized** in that the method also comprises a step in which
the network component (1) is detached from the electric network (2) after a pre-set time when an impedance estimate ratio differs from a pre-set value more than a pre-set quantity.

5.   A method as claimed in any one of the preceding claims 1 to 4, **characterized** in that the voltage and current phasors calculated to define the impedance estimates are fundamental frequency phasors.

6.   A method as claimed in any one of the preceding claims 1 to 4, **characterized** in that the voltage and current phasors calculated to define the impedance estimates are phasors calculated for a certain harmonic.

7.   A method as claimed in any one of the preceding claims 1 to 4, **characterized** in that the method also comprises steps in which

the temperature of the network component (1) is measured, and
the impedance estimate is corrected according to the measured network component temperature.

8.   A method as claimed in any one of the preceding claims 1 to 7, **characterized** in that the network component (1) is a capacitor battery.

9.   A method as claimed in any one of the preceding claims 1 to 7, **characterized** in that the network component (1) is a harmonic filter.

FIG.1

FIG.2

FIG.3

FIG.4

FIG.5

FIG.6